# EUROPÄISCHE PATENTSCHRIFT

(11) **EP 3 022 107 B1**
(45) Veröffentlichungstag und Bekanntmachung des Hinweises auf die Patenterteilung: **03.07.2019**
(21) Anmeldenummer: 14724480.0
(22) Anmeldetag: 19.05.2014
(51) Int. Cl.: B62D 9/00

(54) **VERFAHREN ZUM BETREIBEN DER LENKUNG EINES KRAFTFAHRZEUGS**
METHOD FOR OPERATING THE STEERING SYSTEM OF A MOTOR VEHICLE
PROCÉDÉ PERMETTANT DE FAIRE FONCTIONNER LA DIRECTION D'UN VÉHICULE AUTOMOBILE

(30) Priorität: 17.07.2013 DE 102013011883
(43) Veröffentlichungstag der Anmeldung: 25.05.2016
(73) Patentinhaber: ThyssenKrupp Presta AG, 9492 Eschen (LI)
(72) Erfinder: POLMANS, Kristof, A-6464 Tarrenz (AT); HIRSCHMANN, Richard, 48067 Royal Oak (US)
(74) Vertreter: thyssenkrupp Intellectual Property GmbH
(86) Internationale Anmeldenummer: PCT/EP2014/060209
(87) Internationale Veröffentlichungsnummer: WO 2015/007418

(56) Entgegenhaltungen:
- EP-A1- 1 886 901
- DE-C2- 4 134 240
- US-A1- 2009 088 917
- US-A1- 2009 093 931
- US-A1- 2010 076 650

## Beschreibung

Die vorliegende Erfindung betrifft ein Verfahren zum Betrieb einer Lenkung in einem mindestens zweispurigen Kraftfahrzeug.

Nicht spurgebundene, mindestens zweispurige Kraftfahrzeuge werden üblicherweise gelenkt, indem die Vorderräder von einem Lenkgetriebe verschwenkt werden. Hierzu sind verschiedene Lenkgetriebe im Einsatz, beispielsweise Kugelumlauflenkungen und Zahnstangenlenkungen, die die gelenkten Räder unmittelbar mit einem vom Fahrer zu betätigenden Lenkrad koppeln. Die Lenkgetriebe können dabei hydraulisch oder elektrisch unterstützt sein. Es gibt auch sogenannte Steer-by-wire-Lenkungen, bei denen keine mechanische Zwangskupplung zwischen dem Lenkrad und dem Lenkgetriebe besteht. Diese Lenkungen verschwenken die Räder dann in Abhängigkeit von Steuersignalen durch elektromotorischen oder hydraulischen Antrieb eines Lenkgetriebes.

Es sind weiter verschiedene Verfahren und Vorrichtungen bekannt, die die Lenkung eines Kraftfahrzeugs beeinflussen. Hierbei sind sogenannte Überlagerungslenkungen bekannt, beispielsweise aus den europäischen Patentschriften EP 1 415 888 B1 und EP 1 700 773 B1. Diese Überlagerungslenkungen sind dazu geeignet, bei einer gegebenen Lenkradstellung den Einschlagswinkel der gelenkten Räder weiter zu verändern und so beispielsweise Lenkeingriffe zu ermöglichen, die der Stabilisierung des Kraftfahrzeugs in instabilen Fahrsituationen dienen. Diese Lenkungen können auch dazu verwendet werden, das Lenkübersetzungsverhältnis zu beeinflussen, so dass eine Kraftfahrzeuglenkung mit Überlagerungsgetriebe direkter oder indirekter arbeiten kann, als es die rein mechanische Getriebeübersetzung vorsieht.

Eine Stabilisierung des Kraftfahrzeugs durch einseitige Bremseingriffe ist ebenfalls bekannt und bereits weit verbreitet. Diese Systeme bremsen bei instabilen Fahrzuständen gezielt einzelne Räder des Kraftfahrzeugs ab, um dadurch die Gierrate so zu verändern, dass sie dem vorgesehenen Kurvenverlauf des Kraftfahrzeugs bei gegebener Geschwindigkeit entspricht. Mit anderen Worten wird hier durch Bremseingriffe das Übersteuern oder das Untersteuern in instabilen Fahrzuständen kompensiert.

Ähnliche Verfahren sind unter dem Begriff "torque vectoring" bekannt. Dabei wird das Antriebsmoment durch speziell ausgebildete Differenzialgetriebe so auf die angetriebenen Räder des Fahrzeugs verteilt, dass sich ein bestimmtes Fahrverhalten ergibt, beispielsweise kann dadurch bei einem Fahrzeug mit Frontantrieb die Untersteuerneigung reduziert werden, so dass sich ein Fahrverhalten einstellt, das einen Fahrzeug mit Heckantrieb nahe kommt. Diese Verfahren beeinflussen nicht die Wirkung der Fahrzeuglenkung, sondern das Eigenlenkverhalten des Fahrzeugs.

Schließlich sind auch Lenkungen oder Lenkverfahren bekannt, die bei großen Lenkwinkeln, also am Anschlag der Lenkung, eingreifen. Der Anschlag der Lenkung definiert bei Kraftfahrzeugen den minimalen Wendekreis oder Wenderadius. Dieser Wendekreis kann normalerweise nicht unterschritten werden. Der Anschlag der Lenkung ist erforderlich, um den Kontakt der gelenkten Räder mit der Karosserie oder anderen Komponenten des Kraftfahrzeugs zu verhindern. Der Wendekreis kann dennoch verringert werden, in dem die Räder des Kraftfahrzeugs einseitig mit Drehmomenten beaufschlagt werden. Eine seit Langem bekannte Lösung hierfür stellt die Einzelradbremse bei landwirtschaftlichen Traktoren dar. Bei diesen Verfahren wird das kurveninnere Rad einzeln abgebremst, so dass sich unter dem Einfluss des antreibenden kurvenäußeren Rades der Traktor in die Kurve hinein dreht. Auf diese Weise werden sehr kleine Kurvenradien erzielt. Ein ähnliches Verfahren für Straßenfahrzeuge ist aus der Offenlegungsschrift DE 10 2011 084 765 A1 bekannt. Bei der dort beschriebenen technischen Lösung weist das Kraftfahrzeug einzelne elektrische Radantriebsmotoren auf. Die Verringerung des Wendekreises in den Extremstellungen der Lenkung, also am mechanischen Anschlag des Lenkgetriebes, wird erzielt über einen gezielten zusätzlichen Antrieb der kurvenäußeren Räder und gegebenenfalls eine Bremsung des kurveninneren Rades. Auch hier stellt sich der Effekt ein, dass die Radantriebsmomente eine zusätzliche Drehung des Fahrzeugs um die Hochachse bewirken und dadurch der minimale Kurvenradius des Fahrzeugs am mechanischen Anschlag der Lenkung weiter reduziert wird. Dieses Verfahren wird ausschließlich im Bereich des Lenkanschlags ausgeführt.

Die letztgenannten Verfahren sind nicht geeignet, bei Geradeausfahrt oder geringen Lenkwinkeln die Lenkung zu beeinflussen. Die Überlagerungslenkungen nach den erstgenannten Druckschriften können auch bei Geradeausfahrt die Lenkung beeinflussen, sie sind jedoch mechanisch und elektronisch sehr aufwändig. Deshalb steigen bei ihrer Verwendung das Gewicht und die Kosten der Lenkung.

Aus der gattungsgemäßen EP 1 886 901 A1 ist ein Verfahren zum Betrieb einer Lenkung in einem mindestens zweispurigen Kraftfahrzeug mit einer zwei lenkbare Räder aufweisenden lenkbaren Achse und mit einem Fahrzeugantrieb bekannt, dessen Antriebsmoment in Abhängigkeit von einer Antriebsteuerung als Radantriebsmomente auf die lenkbaren Räder verteilbar ist. Dieses sieht vor, dass ein Fahrzeug-Lenkwinkel gemessen wird, der die tatsächliche Bewegungsrichtung des Fahrzeugs bezogen auf die Geradeausfahrt angibt. Unter Auswertung des von einem Winkelsensor zur Verfügung gestellten Lenkraddrehwinkels wird ein Ziel-Fahrzeug-Lenkwinkel berechnet berechnet, der einen Sollwert des Fahrzeug-Lenkwinkels angibt, wobei weitere Einflussgrößen wie die Fahrzeuggeschwindigkeit berücksichtigt werden können. Ausgehend von der Differenz zwischen dem Fahrzeug-Lenkwinkel und dem Ziel-Fahrzeug-Lenkwinkel wird ein Steuerungssignal von einer Lenkungssteuereinheit an die Antriebssteuereinheit ausgegeben, so dass die Verteilung der Radantriebsmomente als ein linkes Radantriebsmoment und ein rechtes Radantriebsmoment auf die lenkbaren Räder derart, dass eine Verringerung der Differenz zwischen dem gemessenen Fahrzeug-Lenkwinkel und dem berechneten Ziel-Fahrzeug-Lenkwinkel erfolgt.

Es ist daher Aufgabe der vorliegenden Erfindung, ein Verfahren bereitzustellen, mit dem bei eingeschränkter oder ausgefallener Lenkunterstützung das Kraftfahrzeug zumindest eingeschränkt lenkbar bleibt. Diese Aufgabe wird von einem Verfahren mit den Merkmalen des Anspruchs 1 gelöst.

Weil bei einem Fahrzeug der eingangs genannten Bauart, also in einem mindestens zweispurigen Kraftfahrzeug mit einer zwei lenkbare Räder aufweisenden lenkbaren Achse und mit einem Fahrzeugantrieb, dessen Antriebsmoment in Abhängigkeit von einer Antriebsteuerung als Radantriebsmomente auf die lenkbaren Räder verteilbar ist, ein Verfahren zum Betrieb der Lenkung folgende Schritte vorgesehen sind:
- Zur Verfügung stellen eines Lenkraddrehwinkels und eines jeweiligen Ist-Lenkwinkels jedes der zwei lenkbaren Räder in Form von elektronischen Eingangssignalen für eine elektronische Lenkungssteuerung (ECU),
- Auswerten des Lenkraddrehwinkels und Berechnung eines Soll-Lenkwinkels für die zwei lenkbaren Räder aus dem
   Lenkraddrehwinkel,
- Bestimmen einer Differenz nach Betrag und Richtung zwischen dem Ist-Lenkwinkel und dem Soll-Lenkwinkel, und
- Ausgabe eines Steuerungssignals von der Lenkungssteuerung an die Antriebssteuerung,
- Verteilung der Radantriebsmomente als ein linkes Radantriebsmoment und ein rechtes Radantriebsmoment auf die lenkbaren Räder derart, dass eine Verringerung der Differenz zwischen dem Ist-Lenkwinkel und dem Soll-Lenkwinkel der lenkbaren Räder erfolgt, kann ein Lenkdrehmoment im Sinne eines Lenkungsantriebs oder eines Lenkhilfsantriebs allein durch eine geeignete Verteilung des Antriebsmoments des Fahrzeugs erzeugt werden. Vorzugsweise kann dadurch ein elektromechanischer Antrieb der Lenkung unterstützt oder ersetzt werden.

Die Regelung kann ähnlich der oben beschriebenen Regelung auch mit anderen Fahrzeugzustandsgrößen erfolgen, z.B. der Gierrate und/oder der Querbeschleunigung. Dabei wird stets der Ist-Wert mit dem Soll-Wert verglichen.

Wenn weiter vorgesehen ist, dass die Radantriebsmomente an jedem einzelnen lenkbaren Rad mittels separater elektrischer Antriebsmaschinen erzeugt werden, ist eine besonders einfache Steuerung möglich, die für den Fahrer in der Praxis einen hohen Komfort aufweisen kann.

Es kann auch vorgesehen sein, dass die Radantriebsmomente von einer gemeinsamen Antriebsmaschine erzeugt und mittels eines steuerbaren Verteilergetriebes auf die lenkbaren Räder aufgeteilt werden. Dann ist die Verwendung eines einzelnen Elektromotors oder einer Verbrennungsmaschine möglich. Entsprechende Verteilergetriebe sind aus der Praxis bekannt.

Vorteilhaft wird aus einer Fahranforderung des Fahrers, der eine konstante oder beschleunigte Fahrzeuggeschwindigkeit anfordert, das Antriebsmoment ermittelt und die Summe der Radantriebsmomente so eingestellt, dass sie dem Antriebsmoment entspricht. Dann wird für die Erzeugung des Lenkdrehmoments zur Verringerung der Differenz zwischen dem Ist-Lenkwinkel und dem Soll-Lenkwinkel keine zusätzliche Energie benötigt.

Es kann vorgesehen sein, dass das linke und das rechte Radantriebsmoment gegensinnig sind, also ein Rad bremst und das andere Rad beschleunigt, wenn der Betrag eines der Radantriebsmomente, das linke oder das rechte Radantriebsmoment, größer ist als der Betrag des Antriebsmoments. Vorzugsweise kann die Steuerung so eingerichtet sein, dass die Radantriebsmomente nur bei einer Fahrzeuggeschwindigkeit von weniger als 10 km/h, wie sie beim Rangieren des Fahrzeuges vorliegen, gegensinnig sein können.

Die Lenkungssteuerung kann in einer bevorzugten Ausführungsform aus der Differenz der Radantriebsmomente ein resultierendes Lenkmoment bestimmen. Durch diesen berechneten Wert kann das nach dem erfindungsgemäßen Verfahren erzeugte Lenkmoment bei der Berechnung der Antriebsleistung eines Stellantriebs (bei Steer-by-wire-Lenkungen) oder Lenkhilfsantriebs (bei Servolenkungen) benutzt werden, wenn die Lenkung ein Lenkgetriebe mit einem elektromechanischen Antrieb, ausgeführt als Stellantrieb oder als Lenkhilfsantrieb, versehen ist.

Dabei kann die Lenkungssteuerung den Lenkhilfsantrieb mit einem Anforderungssignal für ein Unterstützungsmoment ansteuern, und das Unterstützungsmoment als Differenz von einem insgesamt erforderlichen Lenkhilfsmoment und dem resultierenden Lenkmoment berechnen. Das Lenkmoment wird dann zu einer Reduzierung des Lenkhilfsmoments und damit zu einer Entlastung des elektromechanischen Antriebs genutzt, was wiederum Vorteile hinsichtlich Energieeinsparung und Dimensionierung des Hilfsantriebs bietet.

In einer Ausführungsform kann vorgesehen sein, dass das Verfahren nur dann ausgeführt wird, wenn die Lenkungssteuerung einen Ausfall oder eine Überlast des elektromechanischen Antriebs feststellt. Dann ist das Verfahren als Rückfallebene für ein Steer-by-wire-Lenksystem geeignet, das den eigentlichen Stellmotor kurzfristig oder dauerhaft ersetzen und dadurch das Eintreten unzulässiger Fahrzustände verhindern kann.

Mit anderen Worten ist auch abseits der Extremstellungen oder Anschläge der Lenkung vorgesehen, durch Verteilung der von der wenigstens einen Antriebsmaschine auf die gelenkte Achse ausgeübten Antriebsmomente auf die Räder eine Beeinflussung des eingestellten Lenkwinkels vorzunehmen, so dass durch diese Verteilung der Antriebsmomente zum Einen eine Unterstützung des Servoantriebs erzielt werden kann, die es erlaubt, den Servoantrieb selbst kleiner auszulegen oder die für den Servoantrieb benötigte Antriebsleistung zu verringern. Es wird durch das genannte Verfahren auch möglich, eine zusätzliche Rückfallebene bei einer Steer-by-wire-Lenkung einzuführen, da die Verteilung der Antriebsmomente auf die gelenkten Räder zu einer Lenkbewegung, beispielsweise durch Verlagerung der Zahnstange in einem Lenkgetriebe genutzt werden kann, so dass das Kraftfahrzeug mit Steer-by-wire-Lenkung auch bei einem Ausfall des eigentlichen Stellmotors des Lenkgetriebes durch Verteilung der Radantriebsmomente auf die gelenkten Räder zumindest eingeschränkt lenkbar bleibt.

Es ist hervorzuheben, dass das erfindungsgemäße Verfahren im Allgemeinen keinen zusätzlichen Energieaufwand erfordert, sondern in vielen Fahrzuständen nur auf Basis der dann ohnehin benötigten Antriebsleistung allein durch Verteilung der Leistung bzw. des erforderlichen Antriebsmoments auf die gelenkten Räder durchführbar ist.

Nachfolgend werden Ausführungsbeispiele der vorliegenden Erfindung anhand der Zeichnung beschrieben. Es zeigen:
- Fig. 1:: eine schematische Darstellung einer Zahnstangenlenkung mit zwei separaten Radantrieben,
- Fig. 2:: eine schematische Darstellung einer Steer-by-wire-Lenkung mit zwei separaten Radantrieben, sowie
- Fig. 3:: eine schematische Darstellung einer Lenkung mit einer Antriebsmaschine und einem Verteilergetriebe.

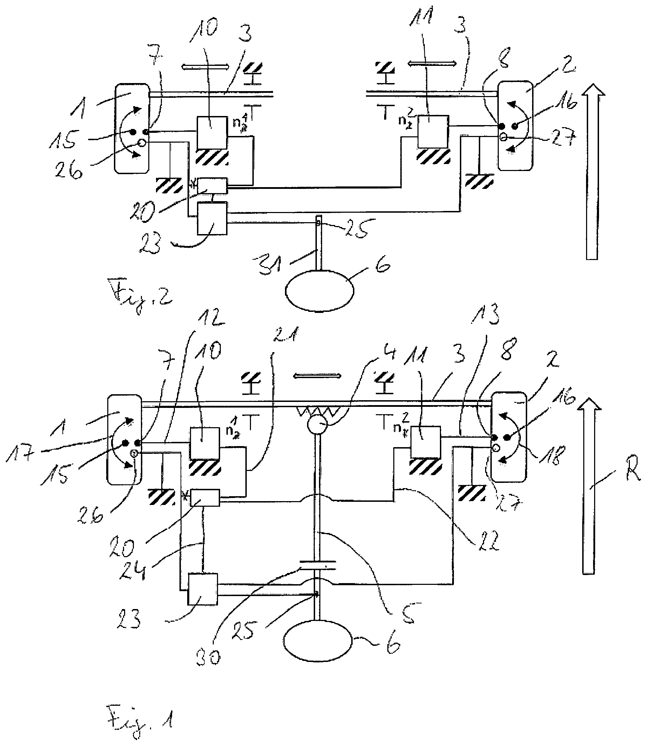

In der Figur 1 ist schematisch eine gelenkte und angetriebene Achse eines Kraftfahrzeugs dargestellt. Die Achse umfasst bezogen auf eine Fahrtrichtung R ein linkes lenkbares Rad 1 und ein rechtes lenkbares Rad 2, die über eine schematisch dargestellte Zahnstange 3 eines Zahnstangenlenkgetriebes 4 miteinander verbunden sind. Das Lenkgetriebe 4 wird über eine Lenkwelle 5 und ein Lenkrad 6 im Betrieb von einem Fahrer manuell betätigt. Dabei wird die Zahnstange 3 quer zu der Fahrtrichtung R nach links oder nach rechts verlagert. Das Rad 1 wird dabei um einen ersten Schwenkpunkt 7 verschwenkt, ebenso wird das Rad 2 um einen zweiten Schwenkpunkt 8 verschwenkt. Die Schwenkpunkte 7 und 8 sind in bekannter Weise durch den Aufbau und die Geometrie von Achsschenkeln definiert.

Der dargestellten lenkbaren Achse sind Einzelradantriebe zugeordnet, nämlich ein erster Radantrieb 10, der in Fahrtrichtung links angeordnet ist, und ein zweiter Radantrieb 11, der in Fahrtrichtung rechts angeordnet ist. Die Radantriebe sind jeweils über Antriebswellen 12, 13 mit den lenkbaren Rädern 1 beziehungsweise 2 antriebsmäßig verbunden. Bei den Radantrieben handelt es sich um Elektromotoren. In einer anderen Ausführungsform können die Radantriebe auch als Radnabenmotoren ausgebildet sein.

Die Räder 1 und 2, die in der Figur 1 schematisch in der Draufsicht dargestellt sind, haben einen Kontakt mit der darunter liegenden Fahrbahn. Die Aufstandsfläche des Rades auf der Fahrbahn weist jeweils einen Mittelpunkt 15, 16 auf, der nicht mit dem Schwenkpunkt 7,8 zusammenfällt. Ein von dem Antriebsmotor 10 auf das lenkbare Rad 1 ausgeübtes Drehmoment führt zu einer resultierenden Kraft, die im Ergebnis an dem Mittelpunkt 15 angreift. Die Entfernung zwischen dem Mittelpunkt und dem Schwenkpunkt 7 bildet einen Hebelarm. Dieser Hebelarm führt mit der Kraft, die in Fahrtrichtung R beschleunigend oder gegen die Fahrtrichtung R bremsend wirkt, zu einem Drehmoment um die Hochachse des Schwenkpunktes 7, welches mit einem Doppelpfeil 17 veranschaulicht ist. Entsprechend führt ein von der Antriebsmaschine 11 auf das Rad 2 ausgeübtes Antriebsmoment zu einer Kraft, die in dem Mittelpunkt 16 angreift und die zusammen mit dem Hebelarm zwischen dem Schwenkpunkt 8 und dem Mittelpunkt 16 ein entsprechendes Drehmoment 18 erzeugt.

Die in Figur 1 dargestellte Anordnung weist weiter eine Antriebssteuerung 20 auf, die über eine Signalleitung 21 den Antriebsmotor 10 und über eine Signalleitung 22 den Antriebsmotor 11 ansteuert. Weiter ist eine Lenkungssteuerung 23 vorgesehen, die über eine Signalleitung 24 mit der Antriebssteuerung 20 verbunden ist. Die Lenkungssteuerung 23 wiederum wertet Signale von Sensoren aus, die hier nur schematisch dargestellt sind. Es handelt sich um einen Lenkradwinkelsensor 25, der im Betrieb den Drehwinkel des Lenkrades 6 und damit die Lenkanforderung des Fahrers erfasst. Weiter gibt es zwei Radwinkelsensoren 26 und 27. Sie messen und übermitteln den aktuellen Winkel der gelenkten Räder 1 und 2, beispielsweise in Bezug auf die Längsrichtung des Fahrzeugs. Entsprechende Signalleitungen verbinden die Sensoren mit der Lenkungssteuerung 23. Die Lenkwinkelsensoren 26 und 27 können auch in einer einfacherer, nicht beanspruchten Ausführungsform durch einen einzelnen Sensor ersetzt werden, der im Lenkgetriebe 4 die Position des Lenkritzels oder der Zahnstange 3 misst, die für den aktuellen Einschlagswinkel der gelenkten Räder 1 und 2 ebenso repräsentativ ist.

Die Lenkwelle 5 ist mehrteilig ausgeführt, was hier in der Figur 1 nur schematisch veranschaulicht ist. Der unmittelbar mit dem Lenkrad 6 und dem Lenkradwinkelsensor 25 verbundene Teil ist von der unteren Lenkwelle, die mit dem Lenkgetriebe 4 verbunden ist, über eine Einrichtung 30 verbunden. Die Einrichtung 30 kann ein an sich bekannter Drehmomentsensor unter Einschluss eines Drehstabs sein, so dass das am Lenkrad 6 aufgewendete Drehmoment oder Lenkhandmoment über den Differenzwinkel zwischen der oberen und der unteren Lenkwelle ermittelbar ist. Die Einrichtung 30 kann auch eine Reibungskupplung sein, die für autonome Lenkeingriffe im Sinne einer Steer-by-wire-Lenkung geöffnet werden kann und zum Herstellen einer drehstarren Verbindung zwischen dem Lenkrad 6 und dem Lenkgetriebe 4 geschlossen werden kann. Solche Kupplungen sind aus dem Stand der Technik bekannt.

Die in Figur 1 dargestellte Lenkung arbeitet im Betrieb nach dem erfindungsgemäßen Verfahren, dass nachfolgend beschrieben wird.

Ausgehend von einem stehenden Fahrzeug und einer Lenkung in der in Figur 1 veranschaulichten Geradeausstellung, die mit der Fahrtrichtung R zusammenfällt, kann der Fahrer das Fahrzeug durch Betätigung des Gaspedals beschleunigen. Dazu wird die Antriebssteuerung 20 das erforderliche Antriebsmoment ermitteln, das dann zu gleichen Teilen auf die Antriebsmaschinen 10 und 11 verteilt wird. Die sich an den Rädern 1 und 2 ergebenden Drehmomente um die Schwenkpunkte 7 und 8 sind dann gleich groß und gegensinnig gerichtet. Das Drehmoment am Rad 1 ist in der Draufsicht der Figur 1 im Uhrzeigersinn gerichtet, während das Drehmoment am Rad 2 gegen den Uhrzeigersinn gerichtet ist. Vom Betrag her sind die beiden resultierenden Drehmomente gleich groß. Sie heben sich also auf. Es entsteht an der Zahnstange 3 keine resultierende Kraft, die die Zahnstange 3 in einer Richtung verlagern würde. Die Lenkungssteuerung 23 wertet die Signale des Lenkradwinkelsensors 25 und der Lenkwinkelsensoren 26 und 27 aus. Da die gewünschte Fahrtrichtung geradeaus ist und der Antrieb keinen Lenkungseinfluss auf das Lenkgetriebe 4 ausübt, ergibt sich keine Differenz zwischen dem durch den Lenkradwinkel 25 vorgegebenen Solllenkwinkel und dem an den Rädern 1 und 2 gemessenen Ist-Lenkwinkeln. Die Steuerung 23 verändert in der Folge die Aufteilung der Antriebsmomente der Antriebsmaschinen 10 und 11 durch die Antriebssteuerung 20 nicht.

Will nun der Fahrer, ausgehend von einem Betriebszustand mit gleichbleibender Fahrgeschwindigkeit und Geradeausfahrt, das Fahrzeug in eine Rechtskurve lenken, so betätigt er das Lenkrad 6 durch Drehung im Uhrzeigersinn. Der entsprechende Lenkradwinkel 25 wird von der Steuerung 23 erfasst. Die Steuerung 23 registriert eine Differenz zwischen dem Soll-Lenkwinkel, der sich aus dem Lenkradwinkel 25 ergibt und dem Ist-Lenkwinkel der Räder 1 und 2, gemessen durch die Sensoren 26 und 27. Um die Lenkbewegung zu unterstützen, ist die Lenkungssteuerung 23 dazu eingerichtet, die Differenz zwischen dem Soll-Lenkwinkel und dem Ist-Lenkwinkel zu verringern. Dies wird dadurch bewirkt, dass die Lenkungssteuerung 23 über die Signalleitung 24 ein Steuersignal an die Antriebssteuerung 20 abgibt, das von der Antriebssteuerung 20 derart umgesetzt wird, dass über die Signalleitung 21 die Antriebsmaschine 10 mit einem höheren Antriebsmoment betrieben wird, während über die Signalleitung 22 die Antriebsmaschine 11 ein Steuersignal für ein niedrigeres Antriebsmoment erhält. Die Summe der Antriebsmomente bleibt gleich, so dass sich die Fahrzeuggeschwindigkeit nicht ändert. Das höhere Antriebsmoment der Antriebsmaschine 10 bewirkt jedoch durch eine höhere resultierende Vortriebskraft im Mittelpunkt 15 und den Hebalarm gegenüber den Schwenkpunkt 7 ein höheres Drehmoment 17 in Uhrzeigerrichtung. Entsprechend bewirkt ein kleineres Antriebsmoment der Antriebsmaschine 11 eine kleinere resultierende Vortriebskraft im Mittelpunkt 16 und damit ein kleineres Drehmoment 18 um den Schwenkpunkt 8 gegen den Uhrzeigersinn. Die Summe der Drehmomente 17 und 18 führt zu einer resultierenden Kraft der Zahnstange 3 nach rechts und damit zu einer Veränderung der Lage des Lenkgetriebes 4 in Richtung einer Rechtskurve. Die Änderung der Verteilung der Antriebsmomente der Antriebsmaschinen 10 und 11 bewirkt also im Ergebnis einen Lenkeinschlag nach rechts. Dadurch wird die Differenz zwischen den Ist-Lenkwinkeln 26 und 27 und dem Soll-Lenkwinkel beziehungsweise den Soll-Lenkwinkeln geringer. Die Lenkungssteuerung 23 regelt sich auf den erforderlichen Wert ein. Es wird dadurch eine Lenkhilfskraft erzeugt, die der Hilfskraft einer herkömmlichen Servolenkung entspricht.

Das entsprechende Verfahren arbeitet in entgegengesetzter Richtung ebenso. Eine Linkskurve wird dadurch eingeleitet, dass das Drehmoment 18 durch ein größeres Antriebsmoment der Antriebsmaschine 11 vergrößert und das Drehmoment 17 durch ein verringertes Antriebsmoment der Antriebsmaschine 10 verkleinert wird.

Ein anderer Betriebszustand liegt vor, wenn das Kraftfahrzeug steht und rangiert werden soll. Das Einschlagen der Lenkung bei stehendem Fahrzeug erfordert ein besonders hohes Lenkmoment und eine besonders hohe Zahnstangenkraft 3, die in herkömmlichen Kraftfahrzeugen die Mindestdimensionierung des Lenkhilfsantriebs vorgibt. Bei dem erfindungsgemäßen Verfahren kann bei stehendem Fahrzeug eine entsprechende Lenkkraft erzeugt werden, die es erlaubt, den Servoantrieb kleiner zu dimensionieren oder ganz entfallen zu lassen. Wenn beispielsweise der Fahrer bei stehendem Fahrzeug die Lenkung nach links einschlagen möchte, so dreht er das Lenkrad 6 gegen den Uhrzeigersinn. Der Lenkradwinkel, ausgegeben von dem Sensor 25, wird von der Lenkungssteuerung 23 erfasst, diese ermittelt daraus einen Soll-Lenkwinkel und vergleicht ihn mit dem Ist-Lenkwinkel der gelenkten Räder 1 und 2. Es entsteht eine Differenz, beispielsweise dadurch, dass das Lenkrad 6 gegenüber dem Lenkgetriebe 4 in der Einrichtung 30 verdreht werden kann, so dass das Lenkgetriebe 4 dem Lenkrad 6 nicht direkt starr zwangsgekoppelt folgt.

Die Differenz zwischen Soll-Lenkwinkel und Ist-Lenkwinkel wird von der Lenkungssteuerung 23 über die Signalleitung 24 an die Antriebssteuerung 20 übermittelt. Die Antriebssteuerung 20 stellt fest, dass das Fahrzeug sich in Ruhe befindet und auch nicht beschleunigt werden soll. Das resultierende Antriebsmoment, das die Antriebsmaschinen 10 und 11 abgeben sollen, ist deshalb gleich Null. Zur Verringerung der Lenkwinkeldifferenz wird dann die Antriebsmaschine 10 so angesteuert, dass ein Drehmoment gegen die Fahrtrichtung R erzeugt wird, während die Antriebsmaschine 11 ein vom Betrag her gleich großes Drehmoment in Fahrtrichtung R auf das Rad 2 abgibt. Die gegensinnigen Drehmomente kompensieren sich vollständig, so dass keine Bewegung des Fahrzeugs in Fahrtrichtung R entsteht. Die sich an den Rädern 1 und 2 ergebenen Drehmomente 17 beziehungsweise 18 sind in der Draufsicht gleichsinnig gegen den Uhrzeigersinn gerichtet. Sie bewirken eine Gesamtkraft auf die Zahnstange 3 in der Figur 1 nach links und dadurch einen Lenkeinschlag der beiden gelenkten Räder 1 und 2 nach links bei stehendem Fahrzeug.

Entsprechend können bei stehendem Fahrzeug zum Rangieren die Antriebsmaschine 10 zur Erzeugung eines Drehmoments in Fahrtrichtung und die Antriebsmaschine 11 zur Erzeugung eines Drehmoments gegen die Fahrtrichtung angetrieben werden, wodurch ein Lenkeinschlag nach rechts bewirkt wird. Die Aufteilung der Antriebsmomente auf die Antriebsmaschinen 10 und 11 kann auch in diesem Betriebszustand die Wirkung eines Lenkhilfsantriebs unterstützen oder ganz ersetzen.

Die Figur 2 zeigt eine Anordnung entsprechend Figur 1, jedoch mit einer sogenannten Steer-by-wire-Lenkung, bei der keine mechanische Zwangskopplung zwischen dem Lenkrad 6 den gelenkten Räder 1 und 2 besteht. Das Verschwenken der gelenkten Räder 1 und 2 um die Schwenkpunkte 7 bzw. 8 erfolgt durch einen nicht dargestellten Stellantrieb, der in bekannter Weise über Zahnstange 3 oder andere Kraftübertragungsmittel die Schwenkbewegung bewirken kann. Dabei können die beiden Räder 1 und 2 über die Zahnstange 3 gekoppelt sein. Es können aber auch Einzelantriebe für die Lenkbewegung jedes einzelnen Rades vorgesehen sein.

Im Übrigen sind gleiche oder gleichwirkende Komponenten mit denselben Bezugsziffern bezeichnet. Einige Bezugsziffern wurden wegen der besseren Übersichtlichkeit weggelassen.

Bei einer Steer-by-wire-Lenkung wie in Figur 2 wird im Normalbetrieb eine Lenkbewegung des Fahrers über das Lenkrad 6 in eine obere Lenkwelle 31 eingeleitet. Die obere Lenkwelle 31 ist verbunden mit dem Lenkradwinkelsensor 25, der das Lenksignal erfasst. Weiter ist in bekannter Weise ein hier nicht dargestellter Handmomentensteller vorgesehen, der dem Fahrer Rückstellkräfte vermittelt. Das Signal des Lenkradwinkelsensors 25 wird für den Normalbetrieb von einer Steuerung an Stellantriebe vermittelt, die über die Zahnstange 3 die Verschwenkung der Räder in vorbestimmter Weise bewirken. So wird eine Lenkung des Kraftfahrzeuges ohne mechanische Zwangskopplung zwischen dem Lenkrad 6 und den gelenkten Rädern 1 und 2 bewirkt.

Bei dieser Bauart von Kraftfahrzeuglenkungen sind besonders hohe Sicherheitsanforderungen zu erfüllen, da ein Ausfall oder eine Störung des elektronischen Systems zu einem Lenkungsausfall führen können. Es muss wenigstens eine Rückfallebene vorgesehen sein, die in einem solchen Fall die Lenkbarkeit des Fahrzeuges sicherstellt. Hierzu sind mechanische und hydraulische Kupplungen bekannt, die bei einer Störung der Elektronik eingreifen. Der Übergang von der rein elektronischen Lenkung zu einer mechanischen Zwangskopplung ist jedoch nur mit großem Aufwand so zu gestalten, dass für den Fahrer kein überraschend anderes Lenkverhalten entsteht, was wiederum zu gefährlichen Fahrsituationen führen könnte. Bei einer Steer-by-wire-Lenkung ist das oben beschriebene erfindungsgemäße Verfahren deshalb auch vorteilhaft anwendbar. Wie zu Figur 1 beschrieben wurde, kann durch die Lenkungssteuerung 23 derart in die Lenkung eingegriffen werden, dass in Abhängigkeit von dem Lenkradwinkelsignal des Sensors 25 und der Lenkwinkelsensoren 26 und 27 Steuersignale an die Antriebssteuerung 20 der beiden, jeweils einem lenkbaren Rad zugeordneten Antriebmaschinen 10 und 11 abgegeben werden. Die Lenkungssteuerung 23 bewirkt dann, dass die Antriebssteuerung 20 die Antriebsmomente, die von den Antriebsmaschinen 10 und 11 erzeugt werden, wie oben beschrieben auf die lenkbaren Räder 1 und 2 aufteilt. Unterschiedliche Antriebsmomente an den lenkbaren Rädern 1 und 2 führen auch bei dieser Lenkung dazu, dass auf die Zahnstange 3 Kräfte einwirken, die die vorgesehene und erforderliche Lenkbewegung unterstützen oder vollständig bewirken.

So würde bei einer Steer-by-wire-Lenkung mit einem Lenkaktuator, der im Normalbetrieb die Lenkung betreibt, die Antriebssteuerung 20 im Normalbetrieb das Antriebsmoment gleichmäßig auf die beiden Antriebsmaschinen 10 und 11 verteilen, sodass sich im Wesentlichen ein Lenksystem ergibt, das von dem Fahrzeugantrieb nicht beeinflusst ist. Erst bei einer Störung oder einem Ausfall des Lenkaktuators wird die Lenkungssteuerung 23 wie oben beschrieben eingreifen und über die Antriebssteuerung 20 eine geänderte Aufteilung der Antriebsmomente auf die Antriebsmaschinen 10 und 11 bewirken, um die Lenkbarkeit des Fahrzeuges sicher zu stellen. Das erfindungsgemäße Verfahren wird hierbei als Rückfallebene für die Steer-by-wire-Lenkung eingesetzt.

Durch die Lenkungssteuerung 23 kann bei entsprechender Programmierung der Übergang vom regulären Betrieb unter Verwendung des nicht dargestellten Lenkaktuators zu der ersten Rückfallebene mit Lenkung durch Verteilung der Antriebsmomente auf die beiden Antriebsmaschinen 10 und 11 "sanft" gestaltet werden, sodass keine für den Fahrer überraschende Änderung der Lenkungseigenschaften eintritt. Zusätzlich kann auch noch eine weitere mechanische Rückfallebene vorgesehen sein, die bei einer Störung in dem erfindungsgemäßen Verfahren oder nach Ablauf einer gewissen Zeit, für die die Störung in der Lenkung vorliegt, eingreift. Hierfür kann beispielsweise die Lenkungssteuerung 23 auch die mechanische Rückfallebene steuern und mit dem Rückgriff auf die mechanische Rückfallebene so lange warten, bis ein Fahrzustand vorliegt, in dem der Übergang zu der mechanischen Rückfallebene ohne überraschende Änderung des Lenkverhaltens für den Fahrer möglich ist.

In einer weiteren Ausgestaltung der Erfindung kann bei der Lenkung nach Figur 2 auch vorgesehen sein, dass das erfindungsgemäße Verfahren mit den beschriebenen technischen Komponenten allein als Lenkaktuator für eine Steer-by-wire-Lenkung wirkt. Hierbei würde dann im Normalbetrieb die Lenkanforderung am Lenkrad 6 über den Lenkradwinkelsensor 25 erfasst und die Steuerung 23 steuert die Antriebssteuerung 20 so, dass eine Verteilung der Antriebsmomente auf die Antriebsmaschinen 10 und 11 derart erfolgt, dass die Differenz zwischen einem berechneten Soll-Lenkwinkel und dem in den Sensoren 25 und 26 oder äquivalenten Sensoren ermittelten Ist-Lenkwinkel verringert wird. Die Verteilung der Antriebsmomente wurde bereits oben zur Figur 1 beschrieben, insbesondere wie eine Lenkung nach rechts und eine Lenkung nach links durch Verteilung der Antriebsmomente bewirkt wird. Auch das Einschlagen der Lenkung beim Rangieren und im Stillstand erfolgt wie oben beschrieben.

Da bei dieser Variante das erfindungsgemäße Verfahren den eigentlichen Lenkaktuator darstellt, ist für den Fall einer Störung dann eine weitere Rückfallebene vorzusehen.

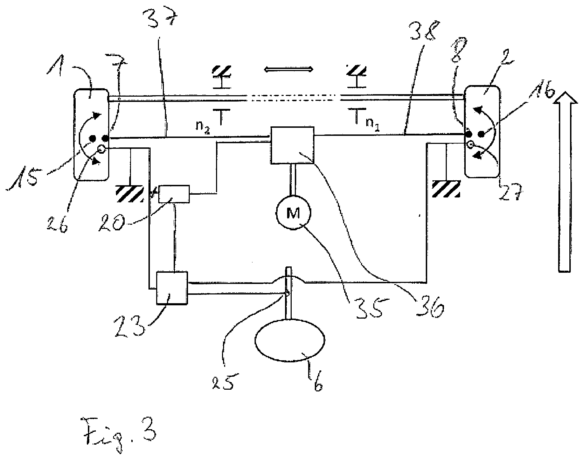

Figur 3 zeigt eine Anordnung wie in den Figuren 1 und 2 dargestellt. Gleiche Komponenten tragen gleiche Bezugsziffern, wobei auch hier auf einige Bezugsziffern verzichtet wurde, um die Übersichtlichkeit zu verbessern.

Die Anordnung aus Figur 3 weist eine zentrale Antriebsmaschine 35 und ein Verteilergetriebe 36 auf. Das Verteilergetriebe 36 ist über Antriebswellen 37 und 38 mit den gelenkten Rädern 1 und 2 antriebsmäßig verbunden. Die Lenkgeometrie (Kraftangriffspunkte 15 und 16, Schwenkpunkte 7 und 8) entspricht den Figuren 1 und 2. Die Lenkungssteuerung 23 arbeitet wie zu Figur 1 und 2 beschrieben. In diesem Ausführungsbeispiel steuert jedoch die Antriebssteuerung 20 das Verteilergetriebe 36 derart, dass die Antriebsmomente zu gleichen Teilen auf die lenkbaren Räder 1 und 2 verteilt werden, wenn kein Lenkungseingriff oder keine Lenkunterstützung erfolgen soll. Das von der Antriebsmaschine 35 zur Verfügung gestellte Antriebsmoment wird dann zu jeweils 50 Prozent an die Räder 1 und 2 geleitet. Die Antriebsmaschine 35 kann dabei die einzige Antriebsmaschine des Kraftfahrzeuges sein und folglich sowohl als Verbrennungsmotor als auch als Elektromotor ausgeführt sein.

Wenn eine Lenkunterstützung oder ein Lenkungseingriff erfolgen soll, wird die Lenkungssteuerung 23 auf Basis des Lenkradwinkelsignals von dem Lenkradwinkelsensor 25 und auf Basis der Ist-Lenkwinkel von den Lenkwinkelsensoren 26 und 27 an das Steuersignal an die Antriebssteuerung 20 abgeben. Die Antriebssteuerung 20 wird dann eine Änderung der Verteilung der Antriebsmomente in dem Verteilergetriebe 36 bewirken, sodass die Antriebsmomente, die den lenkbaren Rädern 1 und 2 zugeführt werden, rechts und links unterschiedliche Werte annehmen, wobei die Richtung der Momente im Fahrbetrieb bei höheren Geschwindigkeiten gleichsinnig sein wird, während beim Rangieren und im Stand auch ein Zustand eintreten kann, bei dem die Antriebsmomente gegensinnig wirken, sodass ohne die Erzeugung einer Vortriebskraft dennoch Drehmomente an die lenkbaren Räder geleitet werden, die zu einer Lenkbewegung führen, ohne dass sich das Fahrzeug in Bewegung setzt.

Auch bei dieser Ausführungsform der Erfindung bewirkt letztlich die Lenkungssteuerung 23, dass durch die Antriebssteuerung 20 und das Verteilergetriebe 36 die Verteilung der Antriebsmomente so erfolgt, dass sich die Differenz zwischen dem Soll-Lenkwinkel und dem Ist-Lenkwinkel verringert. Das erfindungsgemäße Verfahren kann also im Wesentlichen ohne zusätzlichen Energieaufwand eine Servolenkung unterstützen oder den Servoantrieb ganz ersetzen.

### Bezugsziffernliste

- 1.: Rad
- 2.: Rad
- 3.: Zahnstange
- 4.: Lenkgetriebe
- 5.: Lenkgetriebe
- 6.: Lenkrad
- 7.: Schwenkpunkt
- 8.: Schwenkpunkt
- 10.: Radantrieb
- 11.: Radantrieb
- 12.: Antriebswelle
- 13.: Antriebswelle
- 15.: Mittelpunkt
- 16.: Mittelpunkt
- 17.: Doppelpfeil
- 18.: Drehmoment
- 20.: Antriebssteuerung
- 21.: Signalleitung
- 22.: Signalleitung
- 23.: Lenkungssteuerung
- 24.: Signalleitung
- 25.: Lenkradwinkelsensor
- 26.: Radwinkelsensor
- 27.: Radwinkelsensor
- 30.: Einrichtung
- 31.: Lenkwelle
- 35.: Antriebmaschine
- 36.: Verteilergetriebe
- 37.: Antriebswelle
- 38.: Antriebswelle

## Patentansprüche

1. Verfahren zum Betrieb einer Lenkung in einem mindestens zweispurigen Kraftfahrzeug mit einer zwei lenkbare Räder (1, 2) aufweisenden lenkbaren Achse und mit einem Fahrzeugantrieb (10, 11), dessen Antriebsmoment in Abhängigkeit von einer Antriebsteuerung (20) als Radantriebsmomente auf die lenkbaren Räder (1, 2) verteilbar ist, mit folgenden Schritten:
- Zur Verfügung stellen eines Lenkraddrehwinkels und eines jeweiligen Ist-Lenkwinkels jedes der zwei lenkbaren Räder (1, 2) der lenkbaren Achse in Form von elektronischen Eingangssignalen für eine elektronische Lenkungssteuerung (23),
- Auswerten des Lenkraddrehwinkels und Berechnung eines Soll-Lenkwinkels für die zwei lenkbaren Räder (1, 2) aus dem Lenkraddrehwinkel,
- Bestimmen einer Differenz nach Betrag und Richtung zwischen dem Ist-Lenkwinkel und dem Soll-Lenkwinkel, und
- Ausgabe eines Steuerungssignals von der Lenkungssteuerung (23) an die Antriebssteuerung (20),
- Verteilung der Radantriebsmomente als ein linkes Radantriebsmoment und ein rechtes Radantriebsmoment auf die lenkbaren Räder (1, 2) derart, dass eine Verringerung der Differenz zwischen dem Ist-Lenkwinkel und dem Soll-Lenkwinkel der lenkbaren Räder (1, 2) erfolgt.

2. Verfahren nach Anspruch 1, **dadurch gekennzeichnet, dass** die Radantriebsmomente an jedem einzelnen lenkbaren Rad (1, 2) mittels separater elektrischer Antriebsmaschinen (10, 11) erzeugt werden.

3. Verfahren nach Anspruch 1, **dadurch gekennzeichnet, dass** die Radantriebsmomente von einer gemeinsamen Antriebsmaschine (35) erzeugt und mittels eines steuerbaren Verteilergetriebes (36) auf die lenkbaren Räder (1, 2) aufgeteilt werden.

4. Verfahren nach einem der vorhergehenden Ansprüche, **dadurch gekennzeichnet, dass** aus einer Fahranforderung das Antriebsmoment ermittelt wird, und dass die Summe der Radantriebsmomente dem Antriebsmoment entspricht.

5. Verfahren nach einem der vorhergehenden Ansprüche, **dadurch gekennzeichnet, dass** das linke und das rechte Radantriebsmoment gegensinnig sind, wenn der Betrag eines der Radantriebsmomente, das linke oder das rechte Radantriebsmoment, größer ist als der Betrag des Antriebsmoments.

6. Verfahren nach Anspruch 5, **dadurch gekennzeichnet, dass** die Radantriebsmomente nur bei einer Fahrzeuggeschwindigkeit von weniger als 10 km/h gegensinnig sein können.

7. Verfahren nach einem der vorhergehenden Ansprüche, **dadurch gekennzeichnet, dass** die Lenkungssteuerung (23) aus der Differenz der Radantriebsmomente ein resultierendes Lenkmoment bestimmt.

8. Verfahren nach einem der vorhergehenden Ansprüche, **dadurch gekennzeichnet, dass** die Lenkung ein Lenkgetriebe (4, 5) mit einem elektromechanischen Antrieb, ausgeführt als Stellantrieb oder als Lenkhilfsantrieb, aufweist.

9. Verfahren nach Ansprüchen 7 und 8, **dadurch gekennzeichnet, dass** die Lenkungssteuerung (23) den Lenkhilfsantrieb mit einem Anforderungssignal für ein Unterstützungsmoment ansteuert, und dass das Unterstützungsmoment als Differenz von einem insgesamt erforderlichen Lenkhilfsmoment und dem resultierenden Lenkmoment berechnet wird.

10. Verfahren nach Anspruch 8, **dadurch gekennzeichnet, dass** das Verfahren nur dann ausgeführt wird, wenn die Lenkungssteuerung einen Ausfall oder eine Überlast des elektromechanischen Antriebs feststellt.

## Claims

1. Method for operating a steering system in an at least two-track motor vehicle having a steerable axle which has two steerable wheels (1, 2) and having a vehicle drive (10, 11), the drive torque of which can be distributed to the steerable wheels (1, 2) as a wheel drive torques as a function of a drive controller (20), having the following steps:
- making available a steering wheel rotational angle and a respective actual steering angle of each of the two steerable wheels (1, 2) of the steerable axle in the form of electronic input signals for an electronic steering control system (23),
- evaluating the steering wheel rotational angle and calculating a setpoint steering angle for the two steerable wheels (1, 2) from the steering wheel rotational angle,
- determining a difference in terms of absolute value and direction between the actual steering angle and the setpoint steering angle, and
- outputting a control signal from the steering control system (23) to the drive controller (20),
- distributing the wheel drive torques as a left-hand wheel drive torque and the right-hand wheel drive torque to the steerable wheels (1, 2) in such a way that the difference between the actual steering angle and the setpoint steering angle of the steerable wheels (1, 2) is reduced.

2. Method according to Claim 1, **characterized in that** the wheel drive torques at each individual steerable wheel (1, 2) are generated by means of separate electric drive machines (10, 11).

3. Method according to Claim 1, **characterized in that** the wheel drive torques are generated by a common drive machine (35) and distributed to the steerable wheels (1, 2) by means of a controllable transfer case (36).

4. Method according to one of the preceding claims, **characterized in that** the drive torque is acquired from a driving request, and **in that** the sum of the wheel drive torques corresponds to the drive torque.

5. Method according to one of the preceding claims, **characterized in that** the left-hand and the right-hand wheel drive torque are in opposite directions if the absolute value of one of the wheel drive torques, the left-hand or the right-hand wheel drive torque, is greater than the absolute value of the drive torque.

6. Method according to Claim 5, **characterized in that** the wheel drive torques can be in opposite directions only in the case of a vehicle velocity of less than 10 km/h.

7. Method according to one of the preceding claims, **characterized in that** the steering control system (23) determines a resulting steering torque from the difference between the wheel drive torques.

8. Method according to one of the preceding claims, **characterized in that** the steering system has a steering gear (4, 5) with an electromechanical drive, embodied as an actuator drive or as a power steering drive.

9. Method according to Claims 7 and 8, **characterized in that** the steering control system (23) actuates the power steering drive with a request signal for an assistance torque, and **in that** the assistance torque is calculated as a difference between an overall necessary power steering torque and the resulting steering torque.

10. Method according to Claim 8, **characterized in that** the method is executed only if the steering control system detects a failure or overloading of the electromechanical drive.

## Revendications

1. Procédé permettant de faire fonctionner une direction dans un véhicule automobile à au moins deux voies comportant un essieu dirigeable comprenant deux roues directrices (1, 2) et un entraînement de véhicule (10, 11) dont le couple d'entraînement peut, en fonction d'une commande d'entraînement (20), être réparti sur les roues directrices (1, 2) en tant que couples d'entraînement de roue, le procédé comprenant les étapes suivantes consistant à :
- mettre à disposition un angle de braquage de volant de direction et un angle de braquage réel de chacune des deux roues directrices (1, 2) de l'essieu dirigeable sous la forme de signaux d'entrée électroniques pour une commande de direction électronique (23),
- évaluer l'angle de braquage de volant de direction et calculer un angle de braquage de consigne pour les deux roues dirigeables (1, 2) à partir de l'angle de braquage de volant de direction,
- déterminer une différence en termes de valeur absolue et de direction entre l'angle de braquage réel et l'angle de braquage de consigne et
- délivrer un signal de commande à la commande d'entraînement (20) à partir de la commande de direction (23),
- répartir les couples d'entraînement de roue en tant que couple d'entraînement de roue gauche et couple d'entraînement de roue droit sur les roues directrices (1, 2), de telle sorte qu'une diminution de la différence entre l'angle de braquage réel et l'angle de braquage de consigne des roues dirigeables (1, 2) ait lieu.

2. Procédé selon la revendication 1, **caractérisé en ce que** les couples d'entraînement de roue sont produits sur chaque roue dirigeable individuelle (1, 2) au moyen de moteurs d'entraînement électriques séparés (10, 11).

3. Procédé selon la revendication 1, **caractérisé en ce que** les couples d'entraînement de roue sont produits par un moteur d'entraînement commun (35) et sont distribués aux roues directrices (1, 2) au moyen d'une boîte de transfert (36) pouvant être commandée.

4. Procédé selon l'une des revendications précédentes, **caractérisé en ce que** le couple d'entraînement est déterminé à partir d'une demande de conduite, et **en ce que** la somme des couples d'entraînement de roue correspond au couple d'entraînement.

5. Procédé selon l'une des revendications précédentes, **caractérisé en ce que** les couples d'entraînement de roue gauche et droit sont de sens opposés lorsque la valeur absolue de l'un des couples d'entraînement de roue, à savoir le couple d'entraînement de roue gauche ou le couple d'entraînement de roue droit, est supérieure à la valeur absolue du couple d'entraînement.

6. Procédé selon la revendication 5, **caractérisé en ce que** les couples d'entraînement de roue ne peuvent être de sens opposés qu'en cas de vitesse de véhicule inférieure à 10 km/h.

7. Procédé selon l'une des revendications précédentes, **caractérisé en ce que** la commande de direction (23) détermine un couple de braquage résultant à partir de la différence des couples d'entraînement de roue.

8. Procédé selon l'une des revendications précédentes, **caractérisé en ce que** la direction comprend un mécanisme de direction (4, 5) comportant un entraînement électromécanique réalisé sous forme d'actionneur ou d'entraînement auxiliaire de direction.

9. Procédé selon les revendications 7 et 8, **caractérisé en ce que** la commande de direction (23) commande l'entraînement auxiliaire de direction à l'aide d'un signal de demande d'un couple d'assistance, et **en ce que** le couple d'assistance est calculé en tant que différence entre un couple auxiliaire de braquage requis au total et le couple de braquage résultant.

10. Procédé selon la revendication 8, **caractérisé en ce que** le procédé n'est mis en oeuvre que lorsque la commande de direction détecte une défaillance ou une surcharge de l'entraînement électromécanique.
